# EUROPÄISCHE PATENTSCHRIFT

(11) **EP 1 503 201 B1**
(45) Veröffentlichungstag und Bekanntmachung des Hinweises auf die Patenterteilung: **22.08.2007**
(21) Anmeldenummer: 03017387.6
(22) Anmeldetag: 31.07.2003
(51) Int. Cl.: G01M 5/00

(54) **Verfahren zum Prüfen von stehend verankerten Masten**
Method for testing vertically anchored masts
Procédé d'inspection de mâts ancrés verticalement

(43) Veröffentlichungstag der Anmeldung: 02.02.2005
(73) Patentinhaber: City Technologie GmbH, 23795 Bad Segeberg (DE)
(72) Erfinder:
(74) Vertreter: Vollmann, Heiko

(56) Entgegenhaltungen:
- EP-A- 0 638 794
- FR-A- 2 803 385
- FR-A- 2 807 519
- US-A- 5 101 667
- US-A- 5 212 654

## Beschreibung

Die Erfindung betrifft ein Verfahren zum Prüfen von stehend verankerten Masten, bei dem das Prüfobjekt einer Kraft ausgesetzt wird, die im Wesentlichen senkrecht zur Längsausdehnung desselben gerichtet ist, und bei dem die daraus resultierende Verformung gemessen und ausgewertet wird.

Stehend verankerte Systeme, wie Masten werden zu vielerlei Zwecken eingesetzt. Masten beispielsweise als Träger von Beleuchtung, Verkehrsschildern, Ampeln und Freileitungen, und zwar im Wesentlichen in Bereichen, in denen diese Masten recht aggressiven Umwelteinflüssen wie Bodenfeuchtigkeit, Witterungseinflüssen, elektrischen Streuströmen, Emissionen aus Verkehr und Industrie, Streusalzen, Mähmaschinen, Rangiermanövern von Pkws, Vandalismus und vor allem den böigen Winden ausgesetzt sind.

Diese Einflüsse können an den Masten im Erdübergangsbereich bis ca. 0,20 m Tiefe zu Korrosion, Lochfraß, Materialermüdung und Rissbildung führen. Diese Schäden für sich allein oder in Akkumulation können zur Reduzierung der Tragfähigkeit des Mastquerschnitts und dem Verlust der Gebrauchstauglichkeit führen. Derartig angegriffene Masten bergen ein erhebliches Risiko für den öffentlichen Verkehr, da sie langsam bis urplötzlich, in Höhe der Erdgleichen, abknicken und dadurch schwere Unfälle verursachen können. Um solche Risiken vorzubeugen und um eine der betrieblichen Nutzung entsprechende Verwendung zu überprüfen, sollten die Masten in vorgegebenen Zeitintervallen auf ihre Gebrauchstauglichkeit und Tragfähigkeit überprüft werden.

Bisher bekannte Verfahren zur Prüfung von Masten, mittels Biegeprüfung können nur die einaxiale Verformung d.h. Verschiebung des Mastes unter Belastung aufzeichnen, ohne eine saubere Trennung der Einflüsse von Revisionsöffnung oder Bodennachgiebigkeit zu gewährleisten. Die Auswertung bezieht sich auf den Bereich unterhalb der Krafteinleitung. Eine gezielte lokale Prüfung und Aussage des am meisten gefährdetsten Bereichs eines Mastes, auf Höhe des Erdübergangsbereiches wird nicht getätigt.

Solche Verfahren sind z.B. in EP0638794, US5212654 und FR2803385 offenbart.

Ein Verfahren zur Prüfung von Masten ist aus der DE-OS 15 73 752 bekannt. Bei diesem Verfahren findet ein Rahmengestell Verwendung, das sich durch eine am Mastfuß herumgelegte Schelle/Umlenkrolle kontert, und in ca. 1,00 m Höhe über einen hydraulischen Stempel eine Belastung in das System einbringt. Dies bewirkt, dass der freistehende Mastteil gegenüber dem unterirdischen Mastfuß in Höhe der Schelle gebogen wird, wodurch die Einspannung und der Erdübergangsbereich nicht mit überprüft werden. Es kann nur der Teil des Mastes direkt über dem Erdboden gemessen werden, da sonst das die Kraft aus-übende Rahmengestell nicht mehr auf dem Erdboden stehen kann und bei einer Krafteinleitung ins Erdstück abheben würde. Der Bereich unterhalb der Konterung wird nicht belastet und geprüft.

Bei einem Verfahren, das aus DE 94 04 664 U1 bekannt ist, wird unter Zuhilfenahme eines Minibaggers auf eine Konterung verzichtet, da das entsprechende Gegengewicht zur Krafteinleitung durch das Eigengewicht des Minibaggers erreicht wird. Der Mast wird in einer definierten Höhe mit einer horizontalen Einzellast belastet. Mit einem Kraft und einem Wegsensor wird bei der Analyse die gemessene Kraft ins Verhältnis zur einaxialen Wegänderung gesetzt. Das Kraft-Weg-Diagramm stellt die Gesamtverformung des Systems vom Krafteinleitungspunkt bis zum Ende der Einspannung im Boden dar, ohne zwischen den Einflüssen von Mantelöffnungen und nachgiebigen Verankerungen differenzieren zu können. Das Ergebnis basiert auf einer Akkumulation der diversen Einflussgrößen und stellt den Betrag der Verformung dar. Auch dieses Verfahren kann keine lokalen Aussagen zu den Werkstoffeigenschaften im Erdübergangsbereich treffen. Tatsächliche Werkstoffschäden im Erdübergangsbereich werden durch Überlagerungen anderer Einflussfaktoren verdeckt.

Aus FR 2 807 519 A1 sowie US 5,101,667 sind Prüfverfahren bekannt, bei denen ein Hohlkörper von innen mit entgegengesetzt gerichteten Kräften beaufschlagt wird. Diese Verfahren sind bei Masten nicht anwendbar, da diese typischerweise von innen nicht zugänglich sind.

Die Aufgabe der Erfindung besteht in der Schaffung eines Verfahrens und einer Vorrichtung, mit dem die eingangs genannten Prüfobjekte zuverlässig und genau geprüft werden können.

Eine Lösung der Aufgabe besteht in einem Verfahren, bei dem das Prüfobjekt mit zwei einander entgegengesetzten Kräften zusammengedrückt wird, die auf diametral entgegengesetzten Seiten des Querschnitts angreifen, und die Verformung des Querschnitts an dieser Stelle ausgewertet wird.

Die Verformung wird dabei zweckmäßigerweise in der Richtung gemessen, in der die Kräfte wirken. Wird der Mast oder dergleichen durch ein Kräftepaar zusammengedrückt, wird er in Richtung der Kräfte gestaucht. Gleichzeitig dehnt er sich aber dabei in der dazu senkrechten Richtung aus. Diese kann anstelle oder zusätzlich zu der Stauchung gemessen werden.

Im Gegensatz zum Stand der Technik wird also nicht nur eine Kraft von einer Seite auf das Prüfobjekt ausgeübt, das dadurch insgesamt gebogen wird. Es findet vielmehr in erster Linie eine lokale Prüfung statt, solange insbesondere mit anwachsender Kraft die Deformierung linear von der Kraft abhängt, ist das Prüfobjekt in diesem Bereich elastisch, was für einwandfreien Zustand spricht. Selbstverständlich ist bei diesen Messungen immer darauf zu achten, dass das Prüfobjekt nicht stärker belastet wird, als dies vorgegebenen Grenzwerten entspricht.

Bei einer vorteilhaften Ausführungsform wird nun aber nicht nur die Verformung an genau der Stelle gemessen, an der auch die Kräfte angreifen. Vielmehr werden entsprechende Messungen auch über und/oder unter der Stelle vorgenommen, an der die Kräfte wirken. Die Erfindung geht dabei von der Erkenntnis aus, dass das Prüfobjekt durch die diametral wirkenden Kräfte nicht nur an der Stelle der Kraftanleitung deformiert wird, sondern auch in den danebenliegenden Bereichen. Indem die lokale Variation der Verformung in der Nähe der Stelle, an der die Kräfte angreifen, gemessen wird, können so Aussagen über die Qualität des Mastes gemacht werden.

Vorteilhafterweise wird die Messung in unterschiedlichen Höhen durchgeführt, da man auf diese Weise die Qualität des gesamten Profils oder zumindest des wesentlichen Teils z.B. in der Nähe der Verankerung messen kann. Erstaunlicherweise ist es dabei nicht unbedingt erforderlich, dass man wie eben erwähnt die Verformung auch neben der Krafteinleitungsstelle misst. Befindet sich nämlich neben der Krafteinleitungsstelle eine defekte Stelle, so beeinflusst dies ebenfalls die Messung an der Krafteinleitungsstelle und wird durch die Auswertung der Verformung in unterschiedlichen Höhen festgestellt. Auf diese Weise kann man das Verhalten in verschiedenen Höhen über der Verankerung im Boden messen und auf diese Weise sogar Aussagen über die Qualität des im Boden verankerten Teils machen. Befindet sich nämlich im Boden eine Fehlerstelle, so wird deren Einfluss auf das Verformungs-Verhalten umso größer werden, je näher die Stellen, wo die Kräfte ausgeübt werden, dem Erdboden und damit dieser Stelle kommen. Es ist aber nicht erforderlich, dass die Messung auch direkt an der defekten Stelle durchgeführt wird, was natürlich bei im Boden angeordneten Defekten nicht oder nur mit ganz erheblichem Aufwand z.B. durch Aufgraben möglich wäre.

Gemäß der Erfindung sind die Kräfte Druckkräfte. Das Prüfobjekt könnte an der Stelle, wo der Querschnitt untersucht werden soll, in einem Rahmen eingespannt werden, mit Hilfe dessen dann auf diametral gegenüberliegenden Seiten einander entgegengesetzte Druckkräfte auf das Prüfobjekt ausgeübt werden.

Vorteilhafterweise wird die Verformung als Funktion der Kraft bestimmt. Insbesondere kann ein die Kraft ausübendes Element mit konstanter Geschwindigkeit auf das Prüfobjekt zu oder von demselben wegbewegt werden und die Kraft als Funktion der Zeit bestimmt und ausgewertet werden.

Die Messwerte können, um Aussagen über die Qualität und mögliche Fehler zu machen, mit Referenz-Werten verglichen werden. Andererseits können die Messwerte aber auch mit berechneten Werten verglichen werden. Selbstverständlich ist auch eine Kombination dieser beiden Verfahren möglich.

Ein besonders einfaches Verfahren der Auswertung besteht darin, dass die Linearität der Kraft als Funktion der Verformung (Weg) oder der Zeit überprüft wird. Lineares Verhalten zeigt dabei Fehlerfreiheit an. Lineare Abhängigkeit der Verformung von der Zeit setzt dabei voraus, dass die kraftausübenden Elemente mit gleichförmiger Geschwindigkeit auf das Prüfobjekt zu bewegt werden.

Vorteilhafter Weise erfolgt sofort eine Meldung falls Fehler festgestellt werden, insbesondere bei Feststellen von Nichtlinearität.

Eine Vorrichtung zum Prüfen von stehend verankerten Masten, Antennen und ähnlich stehend verankerten Systemen, bei dem das Prüfobjekt einer Kraft ausgesetzt wird, die im Wesentlichen senkrecht zur Längsausdehnung desselben gerichtet ist, und mit der die daraus resultierende Verformung gemessen und ausgewertet wird, zeichnet sich dadurch aus, dass sie eine Einrichtung zur zeitlich variablen Erzeugung eines diametral entgegengesetzten Kräftepaars, das auf einen Querschnitt des Prüfobjekts wirkt, und Mess- und Auswertungseinrichtungen für die resultierende Verformung aufweist.

Die Messung erfolgt dabei mit Wegsensoren. Die Kraft bzw. das Kräftepaar kann durch einen linear Antrieb, Zahnstangengewinde oder einen hydraulischen Zylinder ausgeübt werden. Je weiter die Kräfte den Querschnitt zusammendrücken, umso mehr wird dieser verformt und umso mehr wächst die Kraft der Stauchung oder Dehnung an, die mit Kraftsensoren und Wegsensoren gemessen werden.

Solange eine equivalente Querdrehung oder eine equivalente Stauchung im Prüfquerschnitt mit einem Referenz-Querschnitt oder einer Berechnung besteht, sind die Werkstoffeigenschaften equivalent. Weichen die Verformungen voneinander ab, liegt offenbar ein Fehler vor.

Der Anteil der Querschnittsschwächung lässt sich über die Bestimmung des elastischen und plastischen Verformungsanteils des Querschnitts bestimmen. Dadurch, dass die Verformung des Querschnitts sich in der Länge je nach Belastung auch in einer Entfernung von der Krafteinleitung ausdehnt und die Wegsensoren über diese Länge im Mast verteilt werden, kann eine differenzierte Aussage über lokale Werkstoffeigenschaften unter und über dem belasteten Bereich sicher getätigt werden. Andrerseits ist es aber auch wie bereits erwähnt möglich, durch Messungen an verschiedenen Stellen auch Aussagen über Fehler bzw. Qualität an Stellen zu machen, die außerhalb des Meßbereichs liegen.

Die Erfindung wird im folgenden anhand einer vorteilhaften Ausführungsform unter Bezugnahme auf die beigefügten Zeichnungen beschrieben. Es zeigen:
- Fig.1: in einem Querschnitt durch das Prüfobjekt eine Ausführungsform der erfindungsgemäßen Vorrichtung;
- Fig.2: zwei verschiedene Meßergebnisse, die die Verformung als Funktion der Zeit zeigen;
- Fig.3: in Seitenansicht einen Teil eines Mastes, der mit dem erfindungsgemäßen Verfahren und der erfindungsgemäßen Vorrichtung untersucht werden kann; und
- Fig.4: im Querschnitt die Verformung des Prüfobjekts.

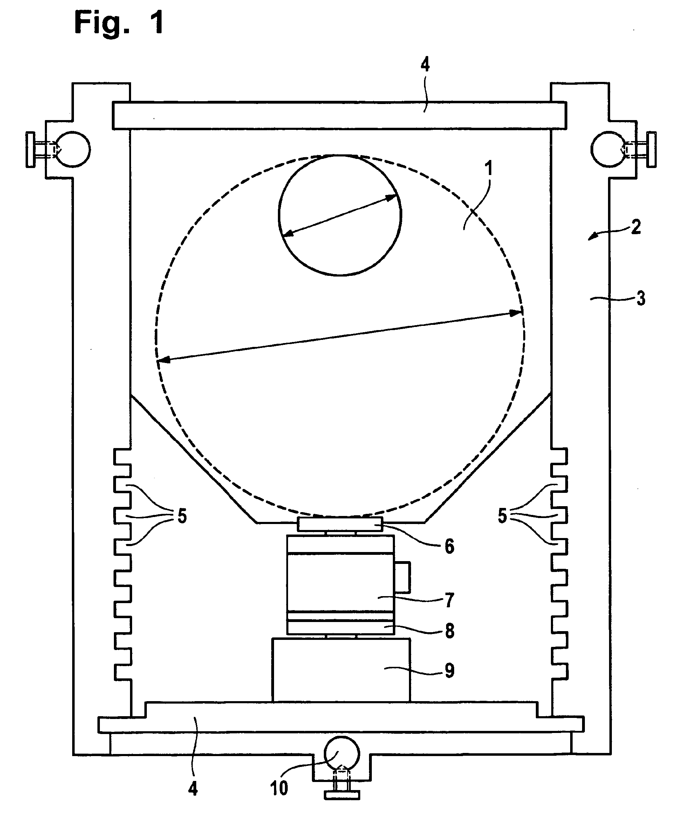

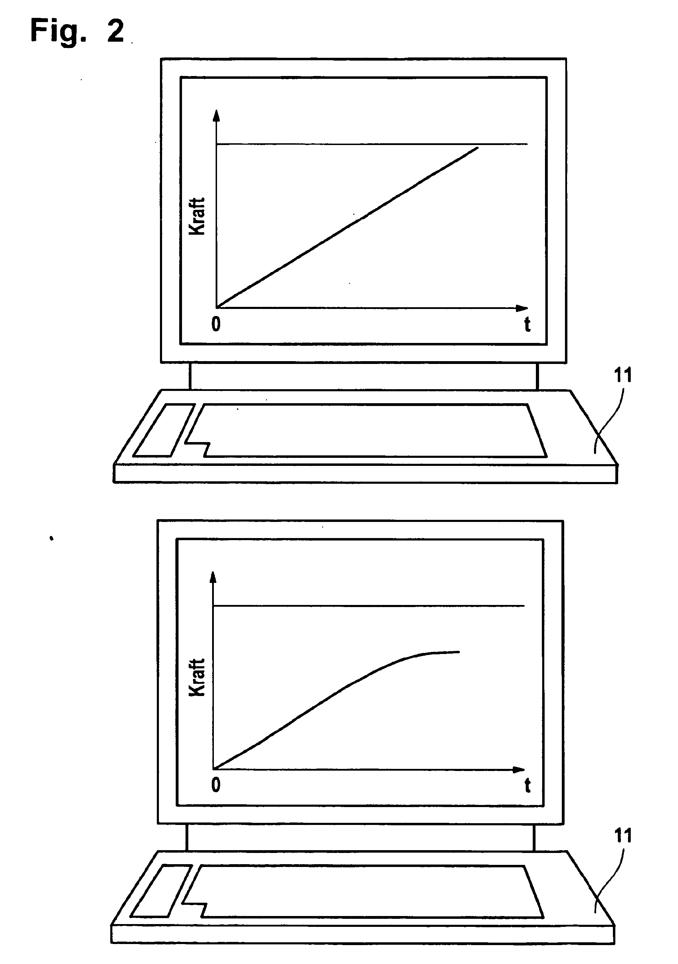

wie dies in Figur 1 gezeigt ist, wird um den zu prüfenden Mast 1 an der zu untersuchenden Querschnittsstelle ein Rahmen 2 angelegt, der den Mast 1 umschließt. Dieser weist zwei Seitenteile 3 auf, die an den beiden Enden durch Querstücke 4 miteinander verbunden sind. Das in der Fig.1 untere Querstück 4 kann dabei an verschiedenen Stellen der Seitenteile 2 angebracht werden, die für diesen Zweck mit einer größeren Anzahl von Ausnehmungen 5 versehen sind. Dadurch ist die Anpassung an verschiedene Durchmesser des Prüfobjekts 1 möglich. Dieses Prüfobjekt liegt an dem einen Querstück 4 an. Auf der anderen Seite ist es mit einem Druckstück 6 in Verbindung, an das sich ein Richtkeil 7 anschließt, der wiederum über eine Zwischenplatte 8 an einer Druckmeßdose 9 anliegt. Mit dem Richtkeil kann dabei eingestellt werden, daß das Prüfobjekt 1 fest, zunächst aber noch ohne große Kraft eingespannt ist. Anschließend wird dann durch einen Linearantrieb oder dergleichen, der bei 10 angedeutet ist, eine zeitlich anwachsende Kraft ausgeübt. Mit der Druckmeßdose kann dabei der Druck gemessen werden. Wenn der Linearantrieb 10 sich mit zeitlich konstanter Geschwindigkeit bewegt, kann auf diese Weise die Kraft als Funktion der Zeit aufgezeichnet werden, wie dies in Figur 2 dargestellt ist. Im oberen Teil erhält man auf dem Anzeigegerät, das mit 11 angedeutet ist, eine lineare Funktion, was für einwandfreie Qualität spricht; im unteren Teil ist diese Funktion bei etwas größeren Kräften nicht mehr linear, was auf einen Fehler hindeutet.

Statt einer Druckmeßdose und/oder eines Antriebs 10 mit seitlich konstanter Geschwindigkeit sind auch andere Kombinationen von Meßeinrichtungen möglich. Es könnte z.B. eine Druckmeßdose mit einem Wegsensor verwendet werden, so daß der Antrieb nicht mehr zeitlich konstante Geschwindigkeit haben muß.

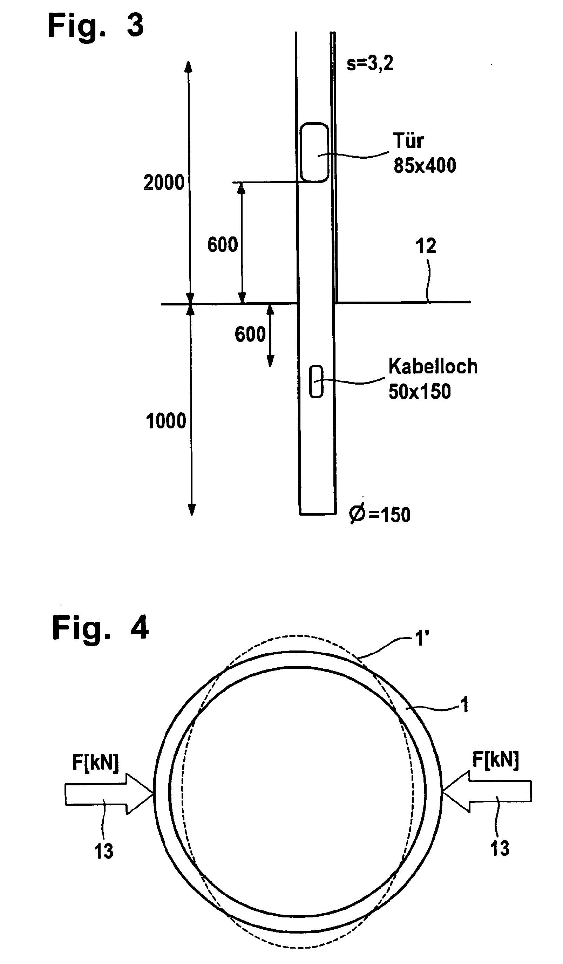

In Figur 3 ist ein Teil eines Mastes gezeigt, der mit dem erfindungsgemäßem Verfahren untersucht werden kann. Ein solcher Mast weist typischerweise z.B. ein Kabelloch und eine Tür auf, die in gewissen Abständen von der Meßstelle 12 angeordnet sind. Durch Verschieben der Meßstelle 12 können dabei auch die Einflüsse des Kabellochs und der Tür festgestellt und berücksichtigt werden.

In Figur 4 ist die verformung gezeigt, die auf den Querschnitt durch die einander diametral entgegengesetzten Druckkräfte 13 ausgeübt wird. Der undeformierte Mast ist bei 1 mit ausgezogenen Linien dargestellt, während der verformte Mast 1 mit gestrichelten Linien dargestellt ist.

## Patentansprüche

1. Verfahren zum Prüfen von stehend verankerten Masten, bei dem das Prüfobjekt (1) einer Kraft ausgesetzt wird, die im Wesentlichen senkrecht zur Längsausdehnung desselben gerichtet ist, und bei dem die daraus resultierende Verformung gemessen und ausgewertet wird, **dadurch gekennzeichnet, dass** das Prüfobjekt (1) mit zwei einander entgegengesetzten Kräften zusammengedrückt wird, die auf diametral entgegengesetzten Seiten den Querschnitt angreifen, und die Verformung des Querschnitts an dieser Stelle ausgewertet wird.

2. Verfahren nach Anspruch 1, **dadurch gekennzeichnet, daß** die Verformung in der Richtung gemessen wird, in der die Kräfte wirken.

3. Verfahren nach Anspruch 1 oder 2, **dadurch gekennzeichnet, daß** die Verformung in der zu der Richtung, in der die Kräfte wirken, senkrechten Richtung gemessen wird.

4. Verfahren nach einem der Ansprüche 1 bis 3, **dadurch gekennzeichnet, daß** die Verformung auch über und/oder unter der Stelle gemessen und ausgewertet wird, an der die Kräfte angreifen.

5. Verfahren nach einem der Ansprüche 1 bis 4, **dadurch gekennzeichnet, daß** die Messung in unterschiedlichen Höhen durchgeführt wird.

6. Verfahren nach einem der Ansprüche 1 bis 5, **dadurch gekennzeichnet, daß** die Kräfte Druckkräfte sind.

7. Verfahren nach einem der Ansprüche 1 bis 6, **dadurch gekennzeichnet, dass** die Verformung als Funktion der Kraft und/oder Zeit bestimmt und ausgewertet wird.

8. Verfahren nach einem der Ansprüche 1 bis 6, **dadurch gekennzeichnet, dass** ein die Kraft ausübendes Element mit konstanter Geschwindigkeit auf das Prüfobjekt zu oder von demselben wegbewegt wird und die Kraft als Funktion der Zeit bestimmt und ausgewertet wird.

9. Verfahren nach einem der Ansprüche 1 bis 8, **dadurch gekennzeichnet, dass** die Messwerte mit Referenzwerten verglichen werden.

10. Verfahren nach einem der Ansprüche 1 bis 8, **dadurch gekennzeichnet, dass** die Messwerte mit berechneten Werten verglichen werden.

11. Verfahren nach einem der Ansprüche 1 bis 10, **dadurch gekennzeichnet, dass** die Linearität der Kraft als Funktion der Verformung oder der Zeit überprüft wird.

12. Verfahren nach Anspruch 11, **dadurch gekennzeichnet, dass** bei Nichtlinearität eine Meldung erfolgt.

13. Verfahren nach einem der Ansprüche 1 bis 12, **dadurch gekennzeichnet, dass** Kraft und Gegenkraft über einen um das Prüfobjekt gelegenen Rahmen ausgelegt werden.

14. Vorrichtung zum Prüfen von stehend verankerten Masten, **dadurch gekennzeichnet, dass** sie eine um das Prüfobjekt anlegbare Einrichtung (2 - 8, 10) zur zeitlich variablen Erzeugung eines diametral entgegengesetzten Kräftepaares, das auf einen Querschnitt des Prüfobjekts (1) wirkt, und Mess- und Auswerteinrichtungen (9, 10) für die resultierende Verformung aufweist.

## Claims

1. A method for testing vertically anchored masts, with which the object to be tested (1) is subjected to a force which is directed essentially perpendicularly to the longitudinal extension of this, and with which the deformation resulting therefrom is measured and evaluated, **characterised in that** the object to be tested (1) is pressed together with two forces which are opposed to one another and which engage the cross section on diametrically opposite sides, and the deformation of the cross section is evaluated at this location.

2. A method according to claim 1, **characterised in that** the deformation is measured in the direction in which the forces act.

3. A method according to claim 1 or 2, **characterised in that** the deformation is measured in the direction perpendicular to the direction in which the forces act.

4. A method according to one of the claims 1 to 3, **characterised in that** the deformation is measured and evaluated also above and/or below the location at which the forces engage.

5. A method according to one of the claims 1 to 4, **characterised in that** the measurement is carried out at different heights

6. A method according to one of the claims 1 to 5, **characterised in that** the forces are compression forces.

7. A method according to one of the claims 1 to 6, **characterised in that** the deformation is determined and evaluated as a function of the force and/or time.

8. A method according to one of the claims 1 to 6, **characterised in that** an element exerting the force is moved at a constant speed onto the object to be tested or away from it, and the force is determined and evaluated as a function of time.

9. A method according to one of the claims 1 to 8, **characterised in that** the readings are compared to reference values.

10. A method according to one of the claims 1 to 8, **characterised in that** the readings are compared to computed values.

11. A method according to one of the claims 1 to 10, **characterised in that** the linearity of the force is examined as function of the deformation or of time.

12. A method according to claim 11, **characterised in that** a notification is effected given non-linearity.

13. A method according to one of the claims 1 to 12, **characterised in that** the force and counter force are formed via a frame situated around the object to be tested.

14. A device for testing vertically anchored masts, **characterised in that** it comprises a device (2-8, 10) which may be applied around the object to be tested, for the temporally variable production of a diametrically opposite force pair, which acts on a cross section of the object to be tested (1), and comprises measurement- and evaluation devices (9, 10) for the resulting deformation.

## Revendications

1. Procédé de contrôle de mâts ancrés verticalement, dans lequel l'objet à vérifier (1) est soumis à une force qui est orientée sensiblement verticalement par rapport à l'extension longitudinale dudit objet, et dans lequel la déformation en résultant est mesurée et analysée, **caractérisé en ce que** l'objet à vérifier (1) est comprimé par deux forces opposées l'une à l'autre, qui sont appliquées sur des côtés diamétralement opposés de la section transversale, et **en ce que** la déformation de la section transversale est analysée à cet endroit.

2. Procédé selon la revendication 1, **caractérisé en ce que** la déformation est mesurée dans la direction dans laquelle les forces agissent.

3. Procédé selon la revendication 1 ou 2, **caractérisé en ce que** la déformation est mesurée dans la direction perpendiculaire à la direction dans laquelle les forces agissent.

4. Procédé selon l'une des revendications 1 à 3, **caractérisé en ce que** la déformation est mesurée et analysée également au-dessus et/ou au-dessous de l'endroit où les forces s'appliquent.

5. Procédé selon l'une des revendications 1 à 4, **caractérisé en ce que** la mesure est effectuée à différentes hauteurs.

6. Procédé selon l'une des revendications 1 à 5, **caractérisé en ce que** les forces sont des forces de compression.

7. Procédé selon l'une des revendications 1 à 6, **caractérisé en ce que** la déformation est déterminée et analysée en fonction de la force et/ou du temps.

8. Procédé selon l'une des revendications 1 à 6, **caractérisé en ce qu'**un élément exerçant la force est approché ou éloigné de l'objet à contrôler à une vitesse constante, et **en ce que** la force est déterminée et analysée en fonction du temps.

9. Procédé selon l'une des revendications 1 à 8, **caractérisé en ce que** les valeurs de mesure sont comparées à des valeurs de référence.

10. Procédé selon l'une des revendications 1 à 8, **caractérisé en ce que** les valeurs de mesure sont comparées à des valeurs calculées.

11. Procédé selon l'une des revendications 1 à 10, **caractérisé en ce que** la linéarité de la force est contrôlée en fonction de la déformation ou du temps.

12. Procédé selon la revendication 11, **caractérisé en ce qu'**en cas de non linéarité, un message est émis.

13. Procédé selon l'une des revendications 1 à 12, **caractérisé en ce que** force et force antagoniste sont ajustées par l'intermédiaire d'un châssis disposé autour de l'objet à contrôler.

14. Dispositif pour le contrôle de mâts ancrés verticalement, **caractérisé en ce qu'**il présente un dispositif (2-8, 10) pouvant être disposé autour de l'objet à contrôler et prévu pour générer, de manière variable en fonction du temps, un couple de forces diamétralement opposées qui agit sur une section transversale de l'objet à contrôler (1), ainsi que des dispositifs de mesure et d'analyse (9, 10) pour la déformation résultante.
